# EUROPÄISCHE PATENTSCHRIFT

(11) **EP 2 910 039 B1**
(45) Veröffentlichungstag und Bekanntmachung des Hinweises auf die Patenterteilung: **11.12.2019**
(21) Anmeldenummer: 13779139.8
(22) Anmeldetag: 16.10.2013
(51) Int. Cl.: H04W 8/20, H04W 12/06, H04W 12/10, H04B 1/3816, H04W 12/00

(54) **VERFAHREN ZUM EINBRINGEN VON TEILNEHMERIDENTITÄTSDATEN IN EIN TEILNEHMERIDENTITÄTSMODUL**
METHOD FOR INCORPORATING SUBSCRIBER IDENTITY DATA INTO A SUBSCRIBER IDENTITY MODULE
PROCÉDÉ POUR INTRODUIRE DES DONNÉES D'IDENTITÉ D'ABONNÉ DANS UN MODULE D'IDENTITÉS D'ABONNÉ

(30) Priorität: 22.10.2012 DE 102012020690
(43) Veröffentlichungstag der Anmeldung: 26.08.2015
(73) Patentinhaber: Giesecke+Devrient Mobile Security GmbH, 81677 München (DE)
(72) Erfinder: RUDOLPH, Jens, 80639 München (DE)
(86) Internationale Anmeldenummer: PCT/EP2013/003110
(87) Internationale Veröffentlichungsnummer: WO 2014/063796

(56) Entgegenhaltungen:
- WO-A1-2011/153714
- WO-A2-2009/133410
- WO-A2-2011/036484
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.2.0, 22. Juni 2010 (2010-06-22), Seiten 1-87, XP050441986, [gefunden am 2010-06-22]

## Beschreibung

Die Erfindung betrifft ein Verfahren zum Einbringen von Teilnehmeridentitätsdaten in ein Teilnehmeridentitätsmodul sowie ein Teilnehmeridentitätsmodul, wobei das Teilnehmeridentitätsmodul betriebsbereit in einem Endgerät eingebracht ist und das Teilnehmeridentitätsmodul eingerichtet ist, eine Mehrzahl von Teilnehmeridentitätsdaten zu verwalten und Teilnehmeridentitätsdaten zu empfangen.

Teilnehmeridentitätsdaten dienen dazu, einen Teilnehmer in einem Kommunikationsnetzwerk, beispielsweise einem digitalen Mobilfunknetzwerk, eindeutig zu identifizieren und/oder zu authentisieren. Durch diese Teilnehmeridentitätsdaten ist es einem Betreiber eines Kommunikationsnetzwerks möglich, die Nutzung eines vom Netzbetreiber angebotenen Dienstes, beispielsweise eines Sprach- und/oder Datendienstes, jedem Teilnehmer in dem Kommunikationsnetzwerk eindeutig zuzuordnen. Weiterhin ist es dem Betreiber möglich, einen Netzzugang, also das Einbuchen in das Kommunikationsnetz, zu ermöglichen, sobald eine Authentisierung des Teilnehmers stattgefunden hat, oder den Netzzugang zu verweigern, falls eine Authentisierung des Teilnehmers nicht möglich ist.

Diese Teilnehmeridentitätsdaten befinden sich in einem Teilnehmeridentitätsmodul, auch als Subscriber Identity Modul (SIM) bezeichnet. Üblicherweise wird jedes Endgerät mit einem derartigen Teilnehmeridentitätsmodul ausgestattet, um Dienste des Kommunikationsnetzwerkes nutzen zu können. Das Teilnehmeridentitätsmodul ist dabei betriebsbereit in ein Endgerät integriert.

Meldet sich ein Teilnehmer an einem Kommunikationsnetz an, so wird mittels der Teilnehmeridentitätsdaten festgestellt, ob der Teilnehmer ordnungsgemäß im Kommunikationsnetz aktiviert ist und welche Dienste der Teilnehmer in dem Netzwerk nutzen darf. Ein nicht eindeutig identifizierbarer bzw. authentifizierbarer Teilnehmer ist zur Nutzung der Dienste nicht berechtigt und wird vom Netzwerk abgewiesen.

Es ist bekannt, in ein Teilnehmeridentitätsmodul zumindest einen ersten und einen zweiten Satz von Teilnehmeridentitätsdaten einzubringen, zwischen denen umgeschaltet werden kann. Derartige Teilnehmeridentitätsmodule werden auch als Dual-IMSI, Multi-IMSI und/oder Auto-Roamer SIM bezeichnet. Derartige Teilnehmeridentitätsmodule werden in einer sicheren Produktionsumgebung entsprechend mit diesen Teilnehmeridentitätsdaten personalisiert.

Zukünftige Teilnehmeridentitätsmodule sollen eingerichtet sein, weitere Sätze von Teilnehmeridentitätsdaten auch nach der Herstellung zu empfangen und verwenden zu können. Dies wird allgemein als Teilnehmeridentitätsdatenverwaltung, auch Subskription-Management bezeichnet. Dabei wird ein Wechsel zwischen Sätzen von Teilnehmeridentitätsdaten zu einem Zeitpunkt entschieden, zu dem das Teilnehmeridentitätsmodul beim Teilnehmer im Einsatz ist. Darüber hinaus wünscht der Teilnehmer, Dienste über ein weiteres Kommunikationsnetz nutzen zu können, wodurch die Generierung der dazu notwendigen Teilnehmeridentitätsdaten wesentlich später als die Herstellung des Moduls erfolgt. Somit kann das Teilnehmeridentitätsmodul nicht während dem Schritt der Personalisierung bei der Herstellung auf den neuen Satz von Teilnehmeridentitätsdaten vorbereitet werden.

Für M2M-Einheiten beschreibt 3GPP TR 33.812 verschiedene Alternativen Teilnehmeridentitätsanwendungen, MCIMs, in einer vertrauenswürdigen Ausführungsumgebung, TRE, der Maschineneinheit, M2ME, zu verwalten. In WO 2009/133410 A2 umfasst eine SIM-Karte eine Vielzahl von vorab installierten Teilnehmeridentitätsdaten, IMSI/Ki, sowie Platzhalter für neue Teilnehmeridentitätsdaten. WO 2011/153714 A1 beschreibt eine SIM-Karte, welche in Antwort auf ein IMSI-Änderungs-Kommando die neuen IMSI-Daten von einem Server anfordert, die neuen IMSI-Daten vom Server empfängt und speichert.

Es ist daher die Aufgabe der vorliegenden Erfindung, ein Verfahren zum Einbringen von Teilnehmeridentitätsdaten in ein Teilnehmeridentitätsmodul vorzuschlagen, welches flexibel und sicher ist. Insbesondere soll das Einbringen nach der Herstellung des Moduls während der Benutzungsphase eines Teilnehmers flexibel und sicher erfolgen.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch ein Verfahren zum Einbringen von Teilnehmeridentitätsdaten (bzw. eines Satzes von Teilnehmeridentitätsdaten) in ein Teilnehmeridentitätsmodul gelöst, wobei das Teilnehmeridentitätsmodul betriebsbereit in einem Endgerät eingebracht ist und das Teilnehmeridentitätsmodul eingerichtet ist, eine Mehrzahl von Teilnehmeridentitätsdaten, d.h. mehrere Sätze von Teilnehmeridentitätsdaten, zu verwalten und Teilnehmeridentitätsdaten zu empfangen, wobei diese Teilnehmeridentitätsdaten in einem Dateisystem abgelegt werden. Das Verfahren umfasst die Schritte: Empfangen eines Ladekommandos von einer Teilnehmeridentitätsdatenverwaltung im Teilnehmeridentitätsmodul; Vorbereiten des Dateisystems im Speicherbereich des Teilnehmeridentitätsmoduls zum Ablegen von Teilnehmeridentitätsdaten; Empfangen von Teilnehmeridentitätsdaten im Teilnehmeridentitätsmodul; Ablegen der Teilnehmeridentitätsdaten in dem vorbereiteten Dateisystem; und Prüfen der Datenintegrität der empfangenen Teilnehmeridentitätsdaten durch das Teilnehmeridentitätsmodul.

Bei einem Endgerät im Sinn der Erfindung handelt es sich prinzipiell um ein Gerät oder eine Gerätekomponente, welches Mittel zur Kommunikation mit einem Kommunikationsnetzwerk aufweist, um Dienste des Kommunikationsnetzes nutzen zu können. Beispielsweise ist ein mobiles Endgerät wie ein Smart Phone, ein Tablet-PC, ein Notebook, ein PDA unter dem Begriff zu verstehen. Unter dem Endgerät können beispielsweise auch Multimediaendgeräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge, Einrichtungen, die Mittel, insbesondere Mobilfunkmodems, zur Kommunikation mit dem Kommunikationsnetzwerk aufweisen.

Bei einem Teilnehmeridentitätsmodul im Sinne der Erfindung handelt es sich generell um eine in Baugröße und Ressourcenumfang reduzierte Computereinheit, welche einen Mikrocontroller und mindestens eine Datenschnittstelle zur Kommunikation mit dem Endgerät aufweist. Dieses Teilnehmeridentitätsmodul weist einen sicheren Speicherbereich auf, in dem die Teilnehmeridentitätsdaten sicher eingebracht sind, um Manipulations- und/oder Missbrauchsversuche bei der Identifizierung und/oder Authentisierung am Netzwerk zu verhindern. Das Teilnehmeridentitätsmodul ist mittels des Endgeräts betriebsfähig, wobei das Modul bis auf Versorgungssignale, wie Versorgungsspannung, Takt, Reset etc. autark ist.

Bei dem Teilnehmeridentitätsmodul handelt es sich beispielsweise um eine Chipkarte, auch Universal Integrated Circuit Card (UICC) oder SIM-Karte, in einem mobilen Kommunikationsnetz mit auf einem Chip gespeicherten maschinenlesbaren Teilnehmeridentifikationsdaten des Teilnehmers. Derartige Teilnehmeridentifikationsmodule werden mittels Kartenleseeinheiten in einem Endgerät betrieben und sind insbesondere dafür vorgesehen, aus dem Endgerät zum Zweck eines Austauschs oder der Verwendung in einem zweiten Endgerät entnommen werden zu können.

Alternativ handelt es sich bei dem Teilnehmeridentitätsmodul um einen integralen Bestandteil innerhalb des Endgeräts, beispielsweise einen fest verdrahteten elektronischen Baustein. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Alternativ handelt es sich bei dem Teilnehmeridentitätsmodul um ein Machine-to-Machine-, kurz M2M-Modul. Derartige Module dienen der Fernüberwachung, -kontrolle und -wartung von Endgeräten wie Maschinen, Anlagen und Systemen. Sie können alternativ auch für Zähleinheiten wie Stromzähler, Warmwasserzähler etc. verwendet werden.

Alternativ ist das Teilnehmeridentitätsmodul als eine Softwarekomponente in einem vertrauenswürdigen Teil eines Betriebssystems, einer sogenannten Trusted Execution Environment (TEE) des Endgerätes ausgebildet. Das Teilnehmeridentitätsmodul ist dann beispielsweise innerhalb einer gesicherten Laufzeitumgebung in Form von darin ablaufenden Programmen, sogenannten Trustlets ausgebildet.

Teilnehmeridentitätsdaten im Sinn der Erfindung sind zum einen Daten, die einen Teilnehmer eindeutig im Kommunikationsnetz identifizieren, beispielsweise eine International Mobile Subscriber Identity (IMSI) und/oder teilnehmerspezifische Daten. Die IMSI ist das in einem Mobilfunkkommunikationsnetzwerk eindeutige Teilnehmeridentitätsdatum. Sie setzt sich zusammen aus dem Landescode MCC (Mobile Country Code), dem Netzwerkcode MNC (Mobile Network Code) und einer fortlaufenden Nummer, die vom Netzbetreiber vergeben wird.

Darüber hinaus können Teilnehmeridentitätsdaten Daten sein bzw. umfassen, die einen Teilnehmer eindeutig am Kommunikationsnetz authentisieren, beispielsweise ein Authentisierungsalgorithmus, spezifische Algorithmusparameter, ein kryptografischer Authentisierungsschlüssel und/oder ein kryptografischer Over-The-Air (OTA) Schlüssel.

Ein Ladekommando von einer Teilnehmeridentitätsdatenverwaltung ist insbesondere ein OTA-Kommando, welches im Teilnehmeridentitätsmodul abgearbeitet wird. Das Kommando beinhaltet insbesondere die Information, dass weitere Teilnehmeridentitätsdaten geladen werden und gibt ggf. bereits Parameter und Strukturen der weiteren Teilnehmeridentitätsdaten an.

Der Schritt des Vorbereitens des Dateisystems im Speicherbereich des Teilnehmeridentitätsmoduls zum Ablegen von Teilnehmeridentitätsdaten, dient dazu, dass die zu einem späteren Zeitpunkt empfangenen Teilnehmeridentitätsdaten im bestehenden Dateisystem abgelegt werden können. Der Schritt beinhaltet demnach die Analyse des Dateisystems auf die existierende Struktur und ggf. Erweiterung des bestehenden Dateisystems um weitere Dateisystemelemente.

Um weitere Teilnehmeridentitätsdaten (bzw. einen weiteren Satz von Teilnehmeridentitätsdaten) in das Teilnehmeridentitätsmodul sicher laden zu können, muss sichergestellt sein, dass das bestehende Dateisystem nicht beschädigt wird und somit das Modul nicht seine Funktionsfähigkeit verliert. Durch das erfindungsgemäße Verfahren und insbesondere den Schritt des Ladekommandos in Verbindung mit dem Schritt des Vorbereitens wird sichergestellt das die weiteren Teilnehmeridentitätsdaten im Hintergrund und ohne Beeinflussung der aktivierten Teilnehmeridentitätsdaten im Teilnehmeridentitätsmodul abgelegt werden können.

Ein Teilnehmer im Sinn der Erfindung ist beispielsweise eine Person, die mittels des Endgeräts auf Dienste des Kommunikationsnetzes zugreifen möchte. Als ein Teilnehmer ist auch ein Endgerät in einer M2M-Umgebung zu verstehen.

Ein Kommunikationsnetzwerk im Sinn der Erfindung ist eine technische Einrichtung, auf der die Übertragung von Signalen unter Identifizierung und/oder Authentisierung des Kommunikationsteilnehmers stattfindet, wodurch Dienste angeboten werden. Das Kommunikationsnetz ist bevorzugt in Mobilfunkzellen aufgebaut. Insbesondere wird in dieser Erfindung beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation oder das "Long Term Evolution", kurz LTE, als Vertreter der vierten Generation als Mobilfunknetz verstanden.

Ein Dienst im Sinn der Erfindung ist insbesondere ein Sprachdienst oder ein Datendienst, mit dem Informationen und/oder Daten über das Kommunikationsnetzwerk übertragen werden.

Mit Mehrzahl von Teilnehmeridentitätsdaten (bzw. Sätzen von Teilnehmeridentitätsdaten) ist gemeint, dass die Anzahl der Teilnehmeridentitätsdaten (bzw. Sätze von Teilnehmeridentitätsdaten) auf dem Teilnehmeridentitätsmodul nicht beschränkt ist. Es ist angedacht, in Zukunft auf einem Teilnehmeridentitätsmodul dreißig oder mehr Sätze von Teilnehmeridentitätsdaten vorzusehen.

Bevorzugt wird das Vorbereiten mittels einer Ferndateiverwaltung erfolgen. Das Dateisystem und die eingebrachten Applikationen des Moduls werden mittels Mechanismen wie dem Remote File Management (RFM) und Remote Applet Management (RAM) administriert. Dazu wird zwischen dem Teilnehmeridentitätsmodul und der Teilnehmeridentitätsverwaltung ein logischer Kanal aufgebaut. Das Endgerät hat auf diesen Kanal keinen logischen Zugriff, sodass die Ferndateiverwaltung das Endgerät tunnelt. Somit können die Vorbereitungen des Dateisystems erfolgen, ohne dass die empfangenen Teilnehmeridentitätsdaten die Funktionalität des Teilnehmeridentitätsmoduls mit den aktivierten Teilnehmeridentitätsdaten beeinflusst oder beeinträchtigt.

Insbesondere umfasst das Vorbereiten das Erweitern des Dateisystems um mindestens ein zusätzliches Dateisystemelement, insbesondere einen Ordner, wobei die Teilnehmeridentitätsdaten in dem zusätzlichen Dateisystemelement abgelegt werden. Die Ausgestaltung des zusätzlichen Dateisystemelements ist dabei abhängig vom Ladekommando und der darin enthaltenen Information bezüglich der weiteren Teilnehmeridentitätsdaten. Sollen die weiteren Teilnehmeridentitätsdaten den Teilnehmer an einem Kommunikationsnetzwerk der dritten Generation identifizieren/ authentisieren, so umfasst das Vorbereiten des Dateisystems insbesondere das Anlegen eines zusätzlichen Ordners, ein sogenanntes Application Dedicated File (ADF), in welchem diese Teilnehmeridentitätsdaten abgelegt werden. Somit werden die unterschiedlichen Teilnehmeridentitätsdaten separiert und strukturiert abgelegt, wobei ein Zugriff auf die empfangenen Teilnehmeridentitätsdaten durch das Endgerät zu diesem Zeitpunkt nicht erfolgt.

In einer bevorzugten Ausgestaltung umfasst das Vorbereiten des Dateisystems das Anlegen eines Schattenverzeichnisses auf der Ebene des Wurzelverzeichnisses im Dateisystem des Teilnehmeridentitätsmoduls. Die Teilnehmeridentitätsdaten werden dabei in dem Schattenverzeichnis empfangen, wobei zum Zeitpunkt des Vorbereitens das Endgerät keinen Zugriff auf das Schattenverzeichnis hat. Dabei sind die zu empfangenden Teilnehmeridentitätsdaten insbesondere dazu vorgesehen einen Teilnehmer an einem Kommunikationsnetzwerk der zweiten Generation zu identifizieren/ authentisieren. Teilnehmeridentitätsdaten der zweiten Generation müssen in das Wurzelverzeichnis, also dem Master File Record (MF), des Dateisystems eingebracht werden, was prinzipiell bedeutet, dass Dateisystemelemente, insbesondere Dateien und Ordner, der aktivierten Teilnehmeridentitätsdaten beeinflusst und überschrieben werden würden, wodurch die aktivierten Teilnehmeridentitätsdaten mit den empfangenen Teilnehmeridentitätsdaten vermischt werden könnten. Dadurch wird das Teilnehmeridentitätsmodul nicht mehr betriebsfähig für das Identifizieren/ Authentisieren des Teilnehmers. Durch das Anlegen eines Schattenverzeichnisses parallel zum Wurzelverzeichnis wird dies in vorteilhafter Weise verhindert, da das Endgerät keinen Zugriff auf das Schattenverzeichnis hat und das Schattenverzeichnis für das Endgerät nicht auswählbar ist.

In einer bevorzugten Ausgestaltung umfasst das Dateisystem Teilnehmeridentitätsdatenvorlagen (sogenannte Templates) für das Ablegen von Teilnehmeridentitätsdaten. Diese Teilnehmeridentitätsdatenvorlagen können bereits vor dem Empfangen des Ladekommandos auf dem Teilnehmeridentitätsmodul abgelegt sein. Diese können bereits bei der Personalisierung in das Dateisystem eingebracht werden. Da die empfangenen Teilnehmeridentitätsdaten eine Größe von weit mehr als 10 kByte aufweisen können, kann mittels der Vorlagen das Laden weiterer Teilnehmeridentitätsdaten beschleunigt und optimiert werden, indem Dateisystemelemente, die prinzipiell in allen Teilnehmeridentitätsdaten enthalten sein müssen, bereits vorab bei der Produktion des Moduls eingebracht werden. Die zu empfangenen Teilnehmeridentitätsdaten ersetzen dann entweder Teile der Vorlagen oder ergänzen die Vorlagen um teilnehmeridentitätsdatenindividuelle Parameter. Alternativ umfassen die Vorlagen komplette Schattenverzeichnisse mit entsprechenden Dateisystemelementen, wie Dateien und Ordnern. Durch die Vorlagen wird der Datenverkehr vermindert und die Ladezeit verkürzt. Es ist möglich mehrere Vorlagen in dem Dateisystem vorzuinstallieren. Die mehren Vorlagen können untereinander verschieden sein. Das Vorbereiten des Dateisystems umfasst dann die Auswahl einer geeigneten - an die zu ladenden Teilnehmeridentitätsdaten angepasste - Vorlage zum Ablegen der empfangenen Teilnehmeridentitätsdaten.

In einer bevorzugten Ausgestaltung erhält das Teilnehmeridentitätsmodul nach dem Schritt des Prüfens ein Umschaltkommando, wobei durch das Umschaltkommando die empfangenen und abgelegten Teilnehmeridentitätsdaten aktiviert werden. Dabei wird sichergestellt, dass ein Umschalten nicht vor dem Prüfen erfolgt, sodass auf unvollständige und/oder falsche Teilnehmeridentitätsdaten nicht umgeschaltet werden kann.

In einer vorteilhaften Ausgestaltung umfasst das Aktivieren das Umbenennen des Wurzelverzeichnisses des Dateisystems sowie das Umbenennen eines Schattenverzeichnisses in das Wurzelverzeichnis des Dateisystems, da das Endgerät keine Zugriffsrechte auf die Schattenverzeichnisse aufweist und darüber hinaus die Schattenverzeichnisse für das Endgerät unsichtbar sind, da sie nebengeordnet zum Wurzelverzeichnis angeordnet sind. Durch das jeweilige Umbenennen und anschließende Neustarten des Teilnehmeridentitätsmoduls werden die empfangenen Teilnehmeridentitätsdaten aktiviert und die aktivierten Teilnehmeridentitätsdaten werden inaktiv. Das Umbenennen erfolgt bevorzugt in Folge eines Umschaltkommandos von der Teilnehmeridentitätsverwaltung.

In einer bevorzugten Ausgestaltung umfasst der Schritt des Prüfens das Errechnen einer Prüfsumme über die empfangenen und abgelegten Teilnehmeridentitätsdaten, wobei das Prüfergebnis die Integrität der Daten anzeigt, wenn die errechnete Prüfsumme gleich einer empfangenen Prüfsumme ist. Somit ist sichergestellt, dass erst nach vollständigem Laden der Teilnehmeridentitätsdaten eine Aktivierung dieser Teilnehmeridentitätsdaten möglich ist. Eine Manipulation der Teilnehmeridentitätsdaten wird damit sicher erkannt.

In einer bevorzugten Ausgestaltung werden die Teilnehmeridentitätsdaten in einem TLV-Format empfangen. Da es zum jetzigen Zeitpunkt nicht standardisiert ist, wie die Teilnehmeridentitätsdaten, insbesondere die Daten für die Authentifizierungsalgorithmus am Netzwerk, die PIN- und PUK-Werte etc, auf dem Teilnehmeridentitätsmodul abzulegen sind, muss ein für unterschiedliche Betriebssysteme auf dem Modul interoperables Datenformat definiert sein, um diese Daten abzulegen und durch das Betriebssystem verwenden zu können. Diese Text-Length-Value (TLV) formatigen Teilnehmeridentitäten werden mittels des Global Platform-Befehl STORE DATE im Modul empfangen.

Bevorzugt sind die empfangenen Teilnehmeridentitätsdaten mittels einer Transportsicherung und/oder einer weiteren Prüfsumme gegen Ausspähen gesichert. Zusätzlich zur Transportsicherung ist eine OTA-Verschlüsselung der Daten vorgesehen.

Im Erfindungsgrundgedanken ist zusätzlich ein Teilnehmeridentitätsmodul zum Identifizieren eines Teilnehmers in einem Mobilfunksystem mittels Teilnehmeridentitätsdaten, das betriebsfähig in einem Endgerät eingebracht ist, wobei das Teilnehmeridentitätsmodul aufweist: eine Datenschnittstelle zum Empfang von Kommandos eines Endgeräts und/oder einer Teilnehmeridentitätsdatenverwaltung; eine zentrale Recheneinheit; und einen Speicherbereich, wobei im Speicherbereich ein Betriebssystem und ein Dateisystem abgelegt sind und wobei das Teilnehmeridentitätsmodul durch das Betriebssystem betriebsfähig ist. Das Teilnehmeridentitätsmodul zeichnet sich dadurch aus, dass im Dateisystem eine Mehrzahl von Teilnehmeridentitätsdaten (bzw. Sätze von Teilnehmeridentitätsdaten) ablegbar sind, wobei vor dem Laden und Ablegen von Teilnehmeridentitätsdaten das Dateisystem derart vorbereitet wird, dass die Teilnehmeridentitätsdaten in voneinander separierten Teilen des Dateisystems ablegbar sind.

In einer Ausgestaltung der Erfindung erfolgt das Aktivieren von inaktiven Teilnehmeridentitätsdaten durch Umsetzen von Verlinkungen auf Dateien im Dateisystem. Dabei können im Wurzelverzeichnis Dateien mit der Bezeichnung gemäß der ETSI-Spezifikationen abgelegt sein, wohingegen der Inhalt dieser Dateien lediglich einen Verweis (Link) auf eine Datei aufweist. Die Datei ist dann eine Datei der empfangenen Teilnehmeridentitätsdaten und befindet sich in einem der zusätzlichen Dateisystemelemente.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Ein System zur Verwaltung von Teilnehmeridentitätsdaten gemäß der Erfindung
- Figur 2: Ein Blockschaltbild eines erfindungsgemäßen Teilnehmeridentitätsmoduls
- Figur 3: Eine Schichtendarstellung des erfindungsgemäßen Teilnehmeridentitätsmoduls
- Figur 4: Ein erfindungsgemäßes Dateisystem zum Einbringen von Teilnehmeridentitätsdaten in ein Teilnehmeridentitätsmodul
- Figur 5: Ein zur Figur 4 alternatives, erfindungsgemäßes Dateisystem

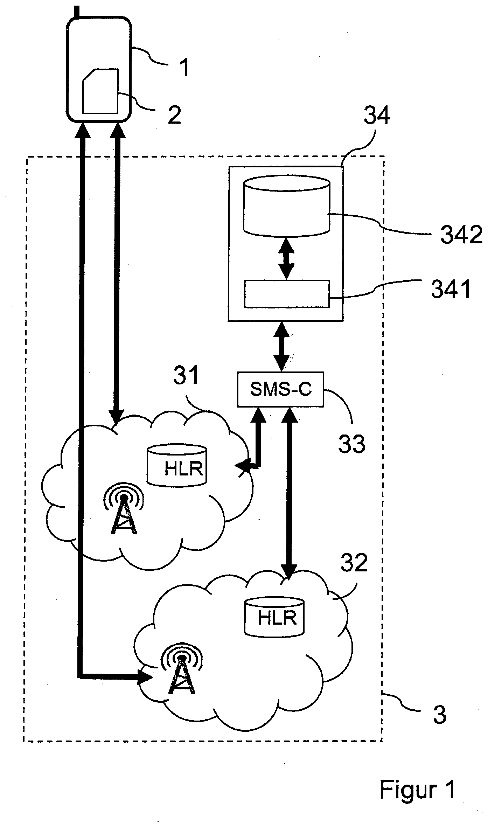

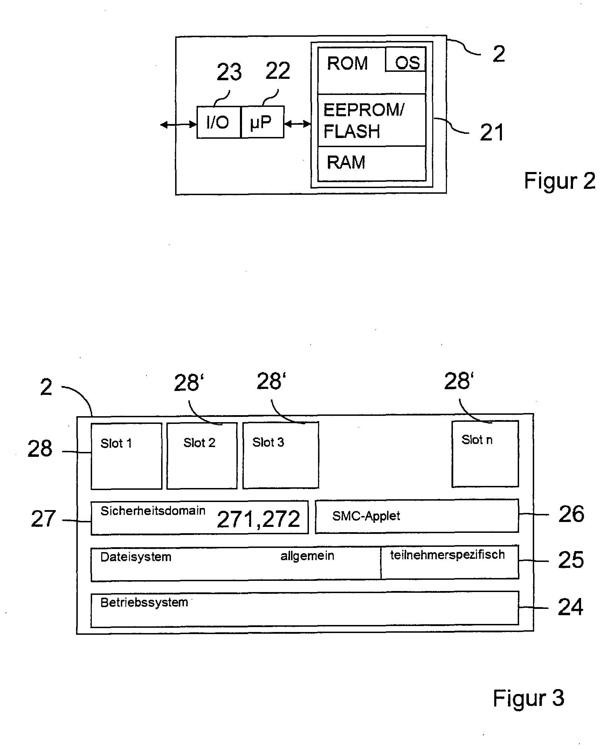

Figur 1 zeigt ein Mobilfunksystem 3 zum sicheren Verwalten von Teilnehmeridentitätsdaten 28. Dabei ist ein Endgerät 1 mit einem Teilnehmeridentitätsmodul 2 ausgestattet. Der Aufbau des Teilnehmeridentitätsmoduls 2 wird anhand Figuren 2 bis 5 näher erläutert werden. Das Mobilfunksystem 3 weist ein erstes Mobilfunknetz 31 und ein zweites Mobilfunknetz 32 auf. Zusätzlich ist ein Short-Message-Service-Center (SMS-C) 33 im Mobilfunksystem 3 enthalten. Der SMS-C 33 ist eine Komponente zum Senden von Nachrichten/Kommandos zum Mobilfunkendgerät 1. Der SMS-C 33 fungiert als ein Gateway zwischen einer TCP/IP basierten Kommunikation und entsprechenden Mobilfunkprotokollen. Der SMS-C 33 entkapselt eine Nachricht innerhalb eines TCP/IP Protokolls, wodurch die Nachricht zu einer klassischen Mobilfunknachricht, beispielsweise OTA-SMS wird. Diese Mobilfunknachrichten können nunmehr Ladekommandos, Umschaltkommandos, Aktivierungskommandos, Deaktivierungskommandos und/oder Löschkommandos zum Verwalten von Teilnehmeridentitätsdaten 28 innerhalb des Teilnehmeridentitätsmoduls 2 enthalten. Die Mobilfunknetze 31,32 sind dabei klassisch aufgebaut, was durch die symbolhafte Darstellung von Sendemasten und einem HLR angedeutet wird. Weitere Instanzen der Mobilfunknetze 31, 32 wurden rein aus Übersichtlichkeitsgründen nicht dargestellt. Das System 3 weist weiterhin eine Teilnehmeridentitätsdatenverwaltung 34 mit einer Teilnehmeridentitätsdatenplattform 341 und einer Teilnehmeridentitätsdaten-Datenbank 342 auf.

Für den normalen Betrieb des Moduls 2 sei angenommen, dass in dem Modul 2 zwei Sätze von Teilnehmeridentitätsdaten geladen sind, um sich jeweils am ersten Netz 31 oder am zweiten Netz 32 zu identifizieren/authentisieren. Dabei sind die Teilnehmeridentitätsdaten 28 des ersten Satzes von Teilnehmeridentitätsdaten aktiv, womit das Nutzen von Diensten am ersten Netz 31 ermöglicht ist. Nun kann der Nutzer des Endgeräts 1 (=Teilnehmer) auf die inaktiven Teilnehmeridentitätsdaten 28' des zweiten Satzes von Teilnehmeridentitätsdaten wechseln, um Dienste des zweiten Netzes 32 nutzen zu können. Das Wechseln kann prinzipiell teilnehmerseitig, endgeräteseitig oder netzseitig initiiert werden. Zunächst müssen die inaktiven Teilnehmeridentitätsdaten 28' aktiviert werden. Ausgehend von einer netzwerkseitigen Initiierung erbittet das zweite Netzwerk 32 die Aktivierung der noch inaktiven Teilnehmeridentitätsdaten 28' an der Datenverwaltung 34 über das Gateway 33. Mittels der Plattform 341 in Verbindung mit der Datenbank 342 wird im Datenverwalter 34 der Status des individuellen Moduls 2 ermittelt und via OTA-Kommandos das Aktivieren der Teilnehmeridentitätsdaten 28' für das zweite Netzwerk 32 veranlasst. Nach der Aktivierung wird durch die Plattform 341 der Wechsel der Teilnehmeridentitätsdaten 28 vom ersten Netzwerk 31 auf das zweite Netzwerk 32 veranlasst. Das Modul 2 wird aus dem HLR des ersten Netzwerks 31 ausgetragen und in das HLR des zweiten Netzwerks 32 eingetragen, dargestellt durch die Pfeile. Die gesamte Kommunikation zwischen den Netzwerken 31, 32 und dem Modul 2 erfolgt auf Basis von OTA-verschlüsselten Kanälen, sodass eine Manipulation der Kommunikation unterbunden ist. Dabei werden stets die OTA-Schlüssel der aktivierten Teilnehmeridentitätsdaten 28 verwendet, da das Modul 2 nur über die aktivierten Teilnehmeridentitätsdaten 28 über das Mobilfunksystem 31 erreichbar ist. Der Status der Teilnehmeridentitätsdaten 28 wird mittels der Plattform 341 überwacht und verwaltet. Eine entsprechende Aktualisierung der Datenbank 342 erfolgt ebenfalls.

Sollen nun weitere Teilnehmeridentitätsdaten 28 dem Modul 2 bereitgestellt werden, beispielsweise zur Identifizierung an einem dritten - hier nicht dargestellten - Netzwerk des Mobilfunksystems 3, wird wie folgt vorgegangen: Erfindungsgemäß wird hier davon ausgegangen, dass die weiteren Teilnehmeridentitätsdaten 28 bereits in der Datenbank 342 enthalten sind. Die Plattform 341 erhält die, für das individuelle Modul 2 verschlüsselten Daten 28 und stellt diese über einen gesicherten Kanal dem Modul 2 zur Verfügung. Dort werden die Daten mittels eines teilnehmeridentitätsmodulindividuellen Schlüssels entschlüsselt. Dieser Vorgang wird als Laden der Teilnehmeridentitätsdaten 28 bezeichnet.

In Figur 2 ist ein Blockschaltbild eines Teilnehmeridentitätsmoduls 2 dargestellt. Dabei weist das Teilnehmeridentitätsmodul 2 eine Datenschnittstelle 23 auf. Eine zentrale Recheneinheit 22 verbindet die Datenschnittstelle 23 mit einem Speicher 21, der flüchtig (RAM) oder nicht flüchtig (ROM, EEPROM, FLASH) ausgebildet sein kann. Die Teilnehmeridentitätsdaten 28, 28' sind in einem veränderbaren nichtflüchtigen Speicherbereich, beispielsweise EEPROM oder Flash, abgelegt. Dadurch können die Teilnehmeridentitätsdaten 28, 28' für das jeweilige System 3 und insbesondere für eine Identifizierung/ Authentisierung an einem der Netzwerke 31, 32 angepasst werden. Insbesondere ist es möglich, dass die Teilnehmeridentitätsdaten 28 nach der Ausgabe des Teilnehmeridentitätsmoduls 2 an den Teilnehmer eingebracht werden können, wodurch ein flexiblerer Einsatz des Moduls 2 möglich ist.

In Figur 3 ist ein Teilnehmeridentitätsmodul 2 für die Verwendung im erfindungsgemäßen Verfahren dargestellt. Dabei ist im Teilnehmeridentitätsmodul 2 ein Betriebssystem 24 mit einem damit verknüpften allgemeinen Dateisystem 25 abgelegt, wobei das Dateisystem 25 über das Betriebssystem 24 administrierbar ist Das Dateisystem 25 ist dabei in ein allgemeines Dateisystem und ein teilnehmerspezifisches Dateisystem unterteilt. Das Teilnehmeridentitätsmodul 2 ist mit einer Mehrzahl von Teilnehmerprofilen ausgestattet. Jedes Teilnehmeridentitätsprofil gemäß Figur 3 beinhaltet Teilnehmeridentitätsdaten 28, die einen Teilnehmer an dem ersten und/oder zweiten Mobilfunknetz 31, 32 eindeutig identifizieren und/oder authentisieren. Die Daten 28 sind dabei einzeln hinzufügbar, aktivierbar, nutzbar, deaktivierbar und auch löschbar. Eine Administration der Daten 28 wird mittels einer im Teilnehmeridentitätsmodul 2 eingebrachten Applikation 26, kurz SMC-Applet durchgeführt. Das SMC-Applet 26 steht in Kommunikationsverbindung mit der Plattform 341 des Datenverwalters 34.

In einem entsprechenden Sicherheitsbereich 27 sind teilnehmeridentitätsmodulindividuelle Schlüssel, ein Prüfsummenalgorithmus 272 sowie ein Transportschlüssel eingebracht. Dieser Sicherheitsbereich 27 wird während der Personalisierung des Moduls 2 eingerichtet. Die jeweiligen Daten 28 werden über die Datenschnittstelle 23, insbesondere als Over-The-Air (OTA) Nachricht aber auch über Internetverbindung (Over-The-Internet, kurz OTI) in das Teilnehmeridentitätsmodul 2 geladen. Die Teilnehmeridentitätsdaten 28 weisen dazu OTA-Schlüssel auf, mit denen ein gesicherter Kanal mit der Plattform 341 aufgebaut werden kann. Zu beachten ist, dass eine Kommunikation über das Mobilfunksystem 3 zwischen dem Modul 2 und dem Datenverwalter 34 nur durch die aktivierten Teilnehmeridentitätsdaten 28 möglich ist.

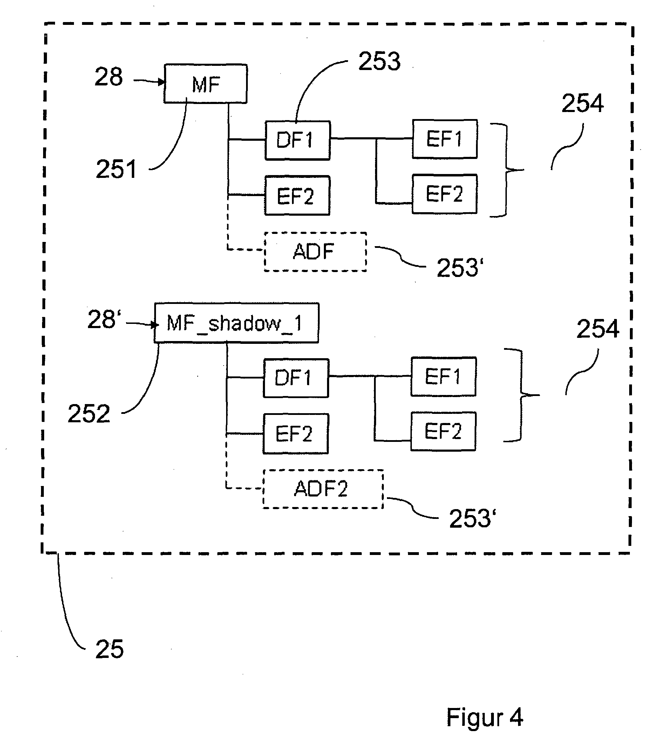

In Figur 4 ist ein erfindungsgemäßes Dateisystem 25 dargestellt. Das Dateisystem 25 weist ein Master File (MF) 251 und ein Dedicated File DF1 als Ordner 253 auf. Hierarchisch untergeordnet weist das DF1 zwei Elementary Files EF1, EF2 auf, die im Folgenden als Dateien 254 bezeichnet werden. Die unter dem MF 251 befindliche Struktur ist für das Endgerät 1 sichtbar, das Endgerät 1 kann auf alle Ordner 253 und Dateien 254 innerhalb des MF 251 zugreifen. Die unter MF 251 befindlichen Dateien 254 und Ordner 253 beinhalten die aktivierten Teilnehmeridentitätsdaten 28.

Wird nun mittels eines Ladekommandos angezeigt, dass Teilnehmeridentitätsdaten 28' für ein Mobilfunknetz der dritten Generation in das Teilnehmeridentitätsmodul 2 geladen werden sollen, veranlasst das SMC 26 das Anlegen eines zusätzlichen Dateisystemelements, einem Application Dedicated File ADF, im Folgenden als Profilordner 253' bezeichnet, im Zuge des Vorbereitens des Dateisystems 25 auf die zu empfangenden Teilnehmeridentitätsdaten 28'. Der Profilordner 253' ist gestrichelt gezeichnet, um anzuzeigen, dass er erstellt bzw. verändert werden musste. Das Erstellen des Profilordners 253' sowie das Anlegen von Dateien 254 innerhalb des Profilordners 253' oder auch das Anpassen von Dateien 254 oder Ordnern 253 außerhalb des Profilordners 253' im Zuge des Empfangens der Teilnehmeridentitätsdaten 28' erfolgt insbesondere mittels einer Ferndateiverwaltung 4.

In Figur 4 ist ebenfalls gezeigt, wie ein Dateisystem 25 nach dem Empfang eines Ladekommandos vorbereitet wird, um Teilnehmeridentitätsdaten 28' zur Identifizierung/Authentisierung an einem Mobilfunknetz 31, 32 der zweiten Generation empfangen zu können. Erfindungsgemäß wird hier ebenfalls mittels Ferndateiverwaltung 4 ein Schattenverzeichnis 252 angelegt. Das Schattenverzeichnis umfasst ebenfalls DFs 253, EFs 254 und ADFs 253'. Das Schattenverzeichnis ist hierarchisch auf der gleichen Ebene, wie das MF 251 im Dateisystem 25 angelegt und insbesondere nicht unterhalb des MF 251 angelegt. Dadurch ist es für ein Endgerät 1 unsichtbar, sodass auf das Schattenverzeichnis 252 durch das Endgerät 1 nicht zugegriffen werden kann. Das Anlegen, Adaptieren und Ablegen empfangener Daten 28' erfolgt aufgrund des logischen Kanals zwischen Teilnehmeridentitätsverwaltung 34 und SMC 26.

Wenn alle Daten 28' empfangen wurden und ein Umschaltkommando auf die empfangenen Teilnehmeridentitätsdaten 28' erfolgt, wird mittels Ferndateiverwaltung 4 das Wurzelverzeichnis 28 in ein Schattenverzeichnis 252 umbenannt und das Schattenverzeichnis 252 in das Wurzelverzeichnis umbenannt Anschließend erfolgt ein Neustart des Moduls 2, beispielsweise mittels eines Refresh-Kommandos. Nach dem Neustart des Moduls 2 greift das Endgerät 1 automatisch auf das "neue" Wurzelverzeichnis zu und verwendet die Daten 28'. Mit der Umbenennung werden die inaktiven Teilnehmeridentitätsdaten 28' aktiviert und zur Authentisierung/Identifizierung des Teilnehmers verwendet.

Da die Dateien EF1 und EF2 des DF110 aktualisiert worden sind, existieren Schattendateien 11 dieser Dateien 10 als EF1* und EF2*, in denen die ursprünglichen Dateiinhalte 16 der Dateien 10 vor der Aktualisierung, also im Ausgangszustand des Dateisystems 8 enthalten sind. Wenn über die Mobilfunkinstanz 7 oder den internen Endgerätschaltkreis 5a ein Rücksetzkommando 17 erfolgt, werden diese Schattendateien 11 einfach an die Stelle der entsprechenden aktualisierten Dateien 10 kopiert, wodurch die aktualisierten Dateien EF1 und EF2 überschrieben werden. Von diesem Rücksetzen 17 unberührt bleiben die EF1 und EF2 der Verzeichnisdatei DF2, da hierzu keine Schattendateien angelegt worden sind. Wenn DF1 und DF2 in irgendeiner Weise interagieren, kann durch dieses Rücksetzverfahren nicht garantiert werden, dass die SIM 1 ordnungsgemäß funktioniert.

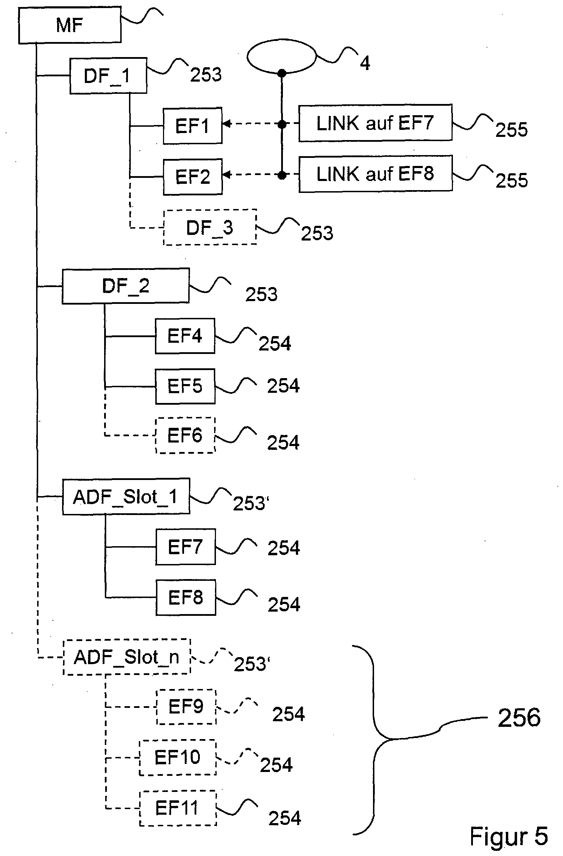

In Figur 5 ist ein alternatives Dateisystem 25 dargestellt, indem zumindest drei Sätze von Teilnehmeridentitätsdaten 28, 28' eingebracht sind. Hier sind nur das Wurzelverzeichnis 251 sowie ein Profilordner 253' gezeigt. Um nun die Teilnehmeridentitätsdaten 28' des Profilordners 253' zu aktivieren, wird mittels Ferndateiverwaltung 4 nicht die Datei 254 selbst aktiviert, sondern lediglich der Link 255 auf eine Datei 254 im Profilordner 253' in die korrespondierende Datei 254 innerhalb der ursprünglichen Dateistruktur geschrieben. Für das Endgerät 1 ändert sich somit an dem Dateisystem 25 nichts, der Aufruf der Datei EF1 im DF_1 führt dazu, dass auf die Datei EF7 gezeigt wird, somit also EF7 anstelle von EF1 ausgeführt wird. Respektive führt das Ausführen der Datei EF2 dazu, dass EF8 ausgeführt wird.

In Figur 5 ist weiterhin eine erfindungsgemäße Profilvorlage (Template) 256 dargestellt. Diese Vorlage 256 wird bereits während der erstmaligen Personalisierung des Teilnehmeridentitätsmoduls 2 bei der Herstellung in das Dateisystem 25 eingebracht. Dabei werden Dateien 254 und auch Ordner 253 in der Profilvorlage 256 angelegt. Beim Empfangen des Ladekommandos wird nun die Profilvorlage 256 ausgewählt und entsprechend der Informationen aus dem Ladekommando vorbereitet. Die zu empfangenden Teilnehmeridentitätsdaten 28' können somit ein geringes Datenvolumen aufweisen, da einerseits Dateien der Vorlage bereits genutzt werden können, andererseits nur eine Aktualisierung der Datei empfangen werden muss und/oder ein Delta (beispielsweise ein Überschuss) der Teilnehmeridentitätsdaten 28 empfangen werden muss. In jedem Fall wird damit die Netzlast zum Laden der Teilnehmeridentitätsdaten 28 reduziert und die Ladezeit erhöht.

Die Teilnehmeridentitätsdaten 28 können insbesondere getrennt werden in einen variablen Teil der Teilnehmeridentitätsdaten, der für jeden Satz von Teilnehmeridentitätsdaten 28 individuell ist, und einen statischen Teil, der für alle Sätze von Teilnehmeridentitätsdaten 28 gleich ist. Entsprechend können die Profilordner 253' bereits mit dem statischen Teil vorgefertigt sein.

Als variabler Teil der Teilnehmeridentitätsdaten 28 ist beispielsweise zu nennen: der Authentisierungsalgorithmus (EF_AuthAlgo), die Authentisierungskonstanten (EF_AuthConst), die Authentisierungsparameter (EF_AuthPar), der Authentisierungs-OPK (EF_AuthOPK), die ICCID (EF_ICCID), die IMSI (EF_IMSI), die SMSP (EF_SMSP), die FPLMN-Liste (EF_FPLMN), die OTA-Schlüssel (EF_OTAkeys).

Als statischer Teil der Teilnehmeridentitätsdaten 28 ist beispielsweise die Verwendung der Dateien 254: EF_Loci; EF_LociGRPS; EF_Kc; EF_KcGPRS; EF_CPBCCH; EF_Keys; EF_PSLoci; EF_KeysPS. Diese Dateien 254 werden mittels des SMC 26 auf einen Standardwert gesetzt und können daher prinzipiell als Profilvorlage 256 bereits auf dem Teilnehmeridentitätsmodul 2 enthalten sein oder an einem zentralen Ort im Dateisystem 25 eingebracht sein, worauf wiederum das Endgerät 1 mit den jeweilig aktivierten Teilnehmeridentitätsdaten 28 Zugriff hat.

Nicht dargestellt ist das Mitversenden einer kryptografischen Prüfsumme. Der Prüfsummenalgorithmus 272 überprüft nach dem vollständigen Empfangen der Teilnehmeridentitätsdaten 28 das Dateisystem 25 oder Teile des Dateisystems 25 durch Errechnen einer Prüfsumme. Anschließend vergleicht er die errechnete Prüfsumme mit der übertragenen Prüfsumme. Ergibt der Vergleich, dass beide Prüfsummen gleich sind, ist die Datenintegrität der Teilnehmeridentitätsdaten 28' bewiesen, die Daten 28' können aktiviert und verwendet werden.

Die Teilnehmeridentitätsdaten werden in Form von hierarchisch strukturierten Dateisystemen 25 im Teilnehmeridentitätsmodul 2 abgelegt. Alle abgelegten Teilnehmeridentitätsdaten 28, 28' sind dabei voneinander weitestgehend separiert, sodass einem Ordner 253, 253' ein Satz von Teilnehmeridentitätsdaten 28, 28' zugeordnet ist. Es ist denkbar, alle Sätze von Teilnehmeridentitätsdaten 28, 28' in einem separaten Ordner 253 abzulegen und die Sätze von Teilnehmeridentitätsdaten 28, 28' entsprechend durchzunummerieren.

## Patentansprüche

1. Verfahren zum Einbringen von Teilnehmeridentitätsdaten (28) in ein Teilnehmeridentitätsmodul (2), wobei das Teilnehmeridentitätsmodul (2) betriebsbereit in einem Endgerät (1) eingebracht ist und das Teilnehmeridentitätsmodul (2) eingerichtet ist eine Mehrzahl von Teilnehmeridentitätsdaten (28) zu verwalten und Teilnehmeridentitätsdaten (28) zu empfangen und wobei diese Teilnehmeridentitätsdaten (28) in einem Dateisystem (25) abgelegt werden, mit den Verfahrensschritten im Teilnehmeridentitätsmodul (2):
- Empfangen eines Ladekommandos für zu empfangende Teilnehmeridentitätsdaten im Teilnehmeridentitätsmodul (2) von einer Teilnehmeridentitätsdatenverwaltung (34);
- Vorbereiten des Dateisystems (25) in einem Speicherbereich (21) des Teilnehmeridentitätsmoduls (2) zum Ablegen von Teilnehmeridentitätsdaten (28);
- Empfangen von Teilnehmeridentitätsdaten (28) im Teilnehmeridentitätsmodul (2);
- Ablegen der Teilnehmeridentitätsdaten (28) in dem vorbereiteten Dateisystem (25); und
- Prüfen der Datenintegrität der empfangenen Teilnehmeridentitätsdaten (28) durch das Teilnehmeridentitätsmodul (2);
wobei in dem Schritt des Ablegens die empfangenen Teilnehmeridentitätsdaten (28) in ein Schattenverzeichnis (252) im Dateisystem (25) des Teilnehmeridentitätsmoduls (2) abgelegt werden, und
wobei zum Aktiveren der abgelegten Teilnehmeridentitätsdaten (28) das Schattenverzeichnis (252) in ein Wurzelverzeichnis (251) des Dateisystems (25) des Teilnehmeridentitätsmoduls (2) umbenannt wird.

2. Verfahren nach Anspruch 1, wobei das Vorbereiten mittels einer Ferndateiverwaltung (4) erfolgt und das Vorbereiten das Erweitern des Dateisystems (25) um mindestens ein Dateisystemelement, insbesondere einen Ordner (253') umfasst und die Teilnehmeridentitätsdaten (28) in dem zusätzlichen Ordner (253') abgelegt werden.

3. Verfahren nach Anspruch 2, wobei die Ausgestaltung des zusätzlichen Dateisystemelements abhängig ist vom Ladekommando und der darin enthaltenen Information bezüglich der zu empfangenden Teilnehmeridentitätsdaten.

4. Verfahren nach einem der vorhergehenden Ansprüche, wobei das Vorbereiten des Dateisystems (25) ein Anlegen des Schattenverzeichnisses (252) auf gleicher Ebene wie das Wurzelverzeichnis (251) im Dateisystem (25) des Teilnehmeridentitätsmoduls (2) umfasst.

5. Verfahren nach einem der vorhergehenden Ansprüche, wobei das Dateisystem (25) Teilnehmeridentitätsdatenvorlagen (256) für das Ablegen von Teilnehmeridentitätsdaten (28) umfasst und diese Teilnehmeridentitätsdatenvorlagen (256) bereits vor dem Empfangen des Ladekommandos auf dem Teilnehmeridentitätsmodul (2) abgelegt sind.

6. Verfahren nach Anspruch 5, wobei das Vorbereiten des Dateisystems ein Auswählen einer geeigneten - an die zu empfangenden Teilnehmeridentitätsdaten angepasste - Vorlage zum späteren Ablegen der empfangenen Teilnehmeridentitätsdaten umfasst.

7. Verfahren nach einem der vorhergehenden Ansprüche, wobei das Teilnehmeridentitätsmodul (2) nach dem Schritt des Prüfens ein Umschaltkommando erhält, wobei durch das Umschaltkommando die empfangenen und abgelegten Teilnehmeridentitätsdaten (28') aktiviert werden.

8. Verfahren nach einem der vorhergehenden Ansprüche, wobei der Schritt des Prüfens das Errechnen (272) einer Prüfsumme über die empfangenen und abgelegten Teilnehmeridentitätsdaten (28') umfasst und wobei das Prüfergebnis die Integrität der Daten anzeigt, wenn die errechnete Prüfsumme gleich einer empfangenen Prüfsumme ist.

9. Verfahren nach einem der vorhergehenden Ansprüche, wobei das Ladekommando die Information beinhaltet, dass Teilnehmeridentitätsdaten geladen werden sollen, und das Ladekommando insbesondere Parameter und Strukturen der zu ladenden Teilnehmeridentitätsdaten angibt.

10. Verfahren nach einem der vorhergehenden Ansprüche, wobei das Endgerät (1) auf das Schattenverzeichnis (252), zumindest zum Zeitpunkt des Vorbereitens, keinen direkten Zugriff hat.

11. Teilnehmeridentitätsmodul (2) zum Identifizieren eines Teilnehmers in einem Mobilfunksystem (3) mittels Teilnehmeridentitätsdaten (28), das betriebsfähig in einem Endgerät (1) eingebracht ist, aufweisend:
- eine Datenschnittstelle (23) zum Empfang von Kommandos des Endgeräts (1) und/oder einer Teilnehmeridentitätsdatenverwaltung (34);
- eine zentrale Recheneinheit (22); und
- einen Speicherbereich (21), wobei im Speicherbereich (21) ein Betriebssystem (24) und ein Dateisystem (25) abgelegt sind und wobei das Teilnehmeridentitätsmodul (2) durch das Betriebssystem (25) betriebsfähig ist;
- im Dateisystem (25) eine Mehrzahl von Teilnehmeridentitätsdaten (28,28') ablegbar sind;
wobei vor einem Empfangen und Ablegen von Teilnehmeridentitätsdaten (28) das Dateisystem (25) derart vorbereitet wird, dass die Teilnehmeridentitätsdaten (28) in voneinander separierten Teilen des Dateisystems (25) ablegbar sind,
wobei im Dateisystem (25) ein Schattenverzeichnis (252) angelegt ist, das als Wurzelverzeichnis des Dateisystems (25) geeignet ist, und
wobei empfangene Teilnehmeridentitätsdaten (28) in dem Schattenverzeichnis (252) abgelegt werden können.

12. Teilnehmeridentitätsmodul (2) nach Anspruch 11, wobei das Endgerät (1) auf einen Teil des vorbereiteten Dateisystems (25), das Schattenverzeichnis (252), keinen direkten Zugriff hat.

13. Teilnehmeridentitätsmodul (2) nach Anspruch 11 oder 12, wobei das Schattenverzeichnis (252) inaktive Teilnehmeridentitätsdaten (28') aufweist und wobei zum Aktiveren der inaktiven Teilnehmeridentitätsdaten (28') das Schattenverzeichnis (252) in ein Wurzelverzeichnis (251) umbenannt werden kann.

14. Teilnehmeridentitätsmodul (2) nach einem der Ansprüche 11 bis 13, wobei das Dateisystem (25) bereits Teilnehmeridentitätsvorlagen (256) aufweist, worin die Teilnehmeridentitätsdaten (28) während eines Ladevorgangs der Teilnehmeridentitätsdaten (28) ablegbar sind.

15. Teilnehmeridentitätsmodul (2) nach einem der Ansprüche 11 bis 14, wobei die Teilnehmeridentitätsdaten gemäß einem Verfahren nach einem der Ansprüche 1 bis 9 eingebracht sind.

## Claims

1. A method for incorporating subscriber identity data (28) into a subscriber identity module (2), with the subscriber identity module (2) being incorporated in ready-to-operate condition in an end device (1), and the subscriber identity module (2) being arranged to manage a plurality of subscriber identity data (28) and to receive subscriber identity data (28), and with said subscriber identity data (28) being stored in a file system (25), having in the subscriber identity module (2) the method steps of:
- receiving a load command for subscriber identity data to be received in the subscriber identity module (2) of a subscriber identity data management (34);
- preparing the file system (25) in a memory area (21) of the subscriber identity module (2) for storing subscriber identity data (28);
- receiving subscriber identity data (28) in the subscriber identity module (2);
- storing the subscriber identity data (28) in the prepared file system (25); and
- checking the data integrity of the received subscriber identity data (28) by the subscriber identity module (2);
wherein in the step of storing, the received subscriber identity data (28) are stored in a shadow directory (252) in the file system (25) of the subscriber identity module (2), and wherein for activating the stored subscriber identity data (28), the shadow directory (252) is renamed to a root directory (251) of the file system (25) of the subscriber identity module (2).

2. The method according to claim 1, wherein the preparing is effected by means of a remote file management (4), and the preparing comprises extending the file system (25) by at least one file system element, in particular a folder (253'), and the subscriber identity data (28) are stored in the additional folder (253').

3. The method according to claim 2, with the configuration of the additional file system element being dependent on the load command and the information contained therein about the subscriber identity data to be received.

4. The method according to any of the preceding claims, in which the preparing of the file system (25) comprises a creating of a shadow directory (252) at the same level as the root directory (251) in the file system (25) of the subscriber identity module (2).

5. The method according to any of the preceding claims, wherein the file system (25) comprises subscriber identity data templates (256) for storing subscriber identity data (28), and said subscriber identity data templates (256) are already stored on the subscriber identity module (2) before the receiving of the load command.

6. The method according to claim 5, in which the file system comprises a selecting of a suitable template - adapted to the subscriber identity data to be loaded - for the later storing of the received subscriber identity data.

7. The method according to any of the preceding claims, wherein the subscriber identity module (2) obtains a switch command after the checking step, with the switch command causing the received and stored subscriber identity data (28') to be activated.

8. The method according to any of the preceding claims, wherein the checking step comprises computing (272) a check sum over the received and stored subscriber identity data (28'), and wherein the check result indicates the integrity of the data when the computed check sum is identical to a received check sum.

9. The method according to any of the preceding claims, wherein the load command contains the information item that subscriber identity data should be loaded, and the load command states in particular parameters and structures of the subscriber identity data to be loaded.

10. The method according to any of the preceding claims, wherein the end device (1), at least at the time of the preparing, has no direct access to the shadow directory (252).

11. A subscriber identity module (2) for identifying a subscriber in a mobile radio system (3) by means of subscriber identity data (28), which is incorporated in operative condition in an end device (1), having:
- a data interface (23) for receiving commands of the end device (1) and/or of a subscriber identity data management (34);
- a central computing unit (22); and
- a memory area (21), with an operating system (24) and a file system (25) being stored in the memory area (21), and with the subscriber identity module (2) being operative through the operating system (25);
- a plurality of subscriber identity data (28, 28') are storable in the file system (25);
with the file system (25) being prepared, before the receiving and storing of subscriber identity data (28), such that the subscriber identity data (28) are storable in mutually separated parts of the file system (25),
with a shadow directory (252) being created in the file system (25), which is suitable as a root directory of the file system (25), and
with received subscriber identity data (28) being storable in the shadow directory (252).

12. The subscriber identity module (2) according to claim 11, wherein the end device (1) has no direct access to a part of the prepared file system (25), the shadow directory (252).

13. The subscriber identity module (2) according to claim 11 or 12, wherein the shadow directory (252) has inactive subscriber identity data (28') and wherein for activating the inactive subscriber identity data (28'), the shadow directory (252) can be renamed to a root directory (251).

14. The subscriber identity module (2) according to any of claims 11 to 13, wherein the file system (25) already has subscriber identity templates (256) in which the subscriber identity data (28) are storable during a loading process of the subscriber identity data (28).

15. The subscriber identity module (2) according to any of claims 11 to 14, wherein the subscriber identity data are incorporated according to a method according to any of claims 1 to 9.

## Revendications

1. Procédé d'insertion de données d'identité d'abonné (28) dans un module d'identités d'abonné (2), cependant que le module d'identités d'abonné (2) est inséré prêt au fonctionnement dans un terminal (1) et que le module d'identités d'abonné (2) est configuré pour gérer une pluralité de données d'identité d'abonné (28) et pour recevoir des données d'identité d'abonné (28), et cependant que ces données d'identité d'abonné (28) sont stockées dans un système de fichiers (25), comprenant les étapes de procédé dans le module d'identités d'abonné (2) :
- réception d'une commande de chargement pour des données d'identité d'abonné à recevoir dans le module d'identités d'abonné (2), de la part d'une gestion de données d'identité d'abonné (34) ;
- préparation du système de fichiers (25), dans une zone mémoire (21) du module d'identités d'abonné (2), pour le stockage de données d'identité d'abonné (28) ;
- réception de données d'identité d'abonné (28) dans le module d'identités d'abonné (2) ;
- stockage des données d'identité d'abonné (28) dans le système de fichiers (25) préparé ; et
- vérification, par le module d'identités d'abonné (2), de l'intégrité des données des données d'identité d'abonné (28) reçues ;
cependant que, à l'étape du stockage, les données d'identité d'abonné (28) reçues sont stockées dans un répertoire d'ombre (252) dans le système de fichiers (25) du module d'identités d'abonné (2), et
cependant que, pour l'activation des données d'identité d'abonné (28) stockées, le répertoire d'ombre (252) est renommé comme étant un répertoire racine (251) du système de fichiers (25) du module d'identités d'abonné (2).

2. Procédé selon la revendication 1, cependant que la préparation a lieu au moyen d'une gestion de données à distance (4) et que la préparation comprend l'extension du système de fichiers (25) d'au moins un élément de système de fichiers, en particulier d'un dossier (253'), et que les données d'identité d'abonné (28) sont stockées dans le dossier (253') supplémentaire.

3. Procédé selon la revendication 2, cependant que la réalisation de l'élément supplémentaire de système de fichiers dépend de la commande de chargement et de l'information y étant contenue quant aux données d'identité d'abonné à recevoir.

4. Procédé selon une des revendications précédentes, cependant que la préparation du système de fichiers (25) comprend une création du répertoire d'ombre (252) au même niveau que le répertoire racine (251) dans le système de fichiers (25) du module d'identités d'abonné (2).

5. Procédé selon une des revendications précédentes, cependant que le système de fichiers (25) comprend des modèles de données d'identité d'abonné (256) pour le stockage de données d'identité d'abonné (28), et que ces modèles de données d'identité d'abonné (256) sont déjà stockés sur le module d'identités d'abonné (2) avant la réception de la commande de chargement.

6. Procédé selon la revendication 5, cependant que la préparation du système de fichiers comprend une sélection d'un modèle approprié - adapté aux données d'identité d'abonné à recevoir - pour le stockage ultérieur des données d'identité d'abonné reçues.

7. Procédé selon une des revendications précédentes, cependant que le module d'identités d'abonné (2) reçoit, après l'étape de la vérification, une commande de commutation, cependant que, par la commande de commutation, les données d'identité d'abonné (28') reçues et stockées sont activées.

8. Procédé selon une des revendications précédentes, cependant que l'étape de la vérification comprend le calcul (272) d'une somme de contrôle se rapportant aux données d'identité d'abonné (28') reçues et stockées, et cependant que le résultat du contrôle indique l'intégrité des données quand la somme de contrôle calculée est égale à une somme de contrôle reçue.

9. Procédé selon une des revendications précédentes, cependant que la commande de chargement contient l'information signifiant que des données d'identité d'abonné doivent être chargées, et que la commande de chargement indique en particulier des paramètres et des structures des données d'identité d'abonné à charger.

10. Procédé selon une des revendications précédentes, cependant que le terminal (1) n'a, du moins au moment de la préparation, pas d'accès direct au répertoire d'ombre (252).

11. Module d'identité d'abonné (2) destiné à l'identification d'un abonné dans un système de radiocommunication mobile (3) au moyen de données d'identité d'abonné (28), lequel est inséré apte au fonctionnement dans un terminal (1), comprenant :
- une interface de données (23) pour la réception de commandes du terminal (1) et/ou d'une gestion de données d'identité d'abonné (34) ;
- une unité de calcul centrale (22) ; et
- une zone mémoire (21), cependant que, dans la zone mémoire (21), un système d'exploitation (24) et un système de fichiers (25) sont stockés, et cependant que le module d'identités d'abonné (2) est, par le système d'exploitation (25), apte au fonctionnement ;
- dans le système de fichiers (25), une pluralité de données d'identité d'abonné (28,28') peuvent être stockées ;
cependant que, avant une réception et un stockage de données d'identité d'abonné (28), le système de fichiers (25) est préparé de telle façon que les données d'identité d'abonné (28) peuvent être stockées dans des parties du système de fichiers (25) séparées les unes des autres,
cependant que, dans le système de fichiers (25), un répertoire d'ombre (252) est créé, lequel est approprié en tant que répertoire racine du système de fichiers (25), et cependant que des données d'identité d'abonné (28) reçues peuvent être stockées dans le répertoire d'ombre (252).

12. Module d'identité d'abonné (2) selon la revendication 11, cependant que le terminal (1) n'a pas d'accès direct à une partie du système de fichiers (25) préparé, à savoir au répertoire pool (252).

13. Module d'identité d'abonné (2) selon la revendication 11 ou 12, cependant que le répertoire d'ombre (252) comporte des données d'identité d'abonné (28') inactives, et cependant que, pour l'activation des données d'identité d'abonné (28') inactives, le répertoire d'ombre (252) peut être renommé comme étant un répertoire racine (251).

14. Module d'identité d'abonné (2) selon une des revendications de 11 à 13, cependant que le système de fichiers (25) comporte déjà des modèles d'identité d'abonné (256) dans lesquels les données d'identité d'abonné (28) peuvent être stockées pendant un chargement des données d'identité d'abonné (28).

15. Module d'identité d'abonné (2) selon une des revendications de 11 à 14, cependant que les données d'identité d'abonné sont insérées suivant un procédé selon une des revendications de 1 à 9.
